# EUROPÄISCHE PATENTSCHRIFT

(11) **EP 1 270 384 B1**
(45) Veröffentlichungstag und Bekanntmachung des Hinweises auf die Patenterteilung: **03.05.2006**
(21) Anmeldenummer: 02013801.2
(22) Anmeldetag: 21.06.2002
(51) Int. Cl.: B62D 55/28, B62D 55/21

(54) **Gleiskette nach dem Verbinderprinzip**
Bi-tubular type endless track
Chenille du type bi-tubulaire

(30) Priorität: 23.06.2001 DE 10130386
(43) Veröffentlichungstag der Anmeldung: 02.01.2003
(73) Patentinhaber: Diehl Remscheid GmbH & Co. KG, 42857 Remscheid (DE)
(72) Erfinder: Spies, Klaus, 42859 Remscheid (DE); Steinebrunner, Norbert, 42477 Radevormwald (DE); Hentschel, Uwe, 50823 Köln (DE)
(74) Vertreter: Diehl Patentabteilung

(56) Entgegenhaltungen:
- DE-B- 1 296 033
- US-A- 2 330 794
- US-A- 2 513 540
- US-A- 3 597 019

## Beschreibung

Die Erfindung bezieht sich auf eine Gleiskette nach dem Verbinderprinzip entsprechend dem Oberbegriff des Anspruchs 1

Die Erfindung geht von einer Gleiskette nach der EP 0 255 071 B2 aus. Gleiskettenkörper weisen endseitig gummigelagerte Bolzen auf. Mehrere Verbinder sind mit den Bolzen benachbarter Kettenkörper fest verschraubt. Zur Straßenschonung sind die Kettenkörper mit Laufpolstern aus einem elastischen Werkstoff versehen. Bei Einsatz von Gleiskettenfahrzeugen im Gelände oder in Schnee und auf Eis ist es wünschenswert, die Traktion und die Seitenführung einer mit Laufpolstern ausgerüsteten Gleiskette zu erhöhen, um das Befahren von schwierigen Geländeabschnitten, Steigungen oder Schräghängen zu ermöglichen.

Aufgabe der Erfindung ist es daher, einen Verbinder vorzuschlagen, der der Gleiskette im Gelände oder in Schnee und auf Eis die erforderliche Traktion und Seitenführung verleiht.

Die Erfindung löst diese Aufgabe entsprechend den kennzeichnenden Merkmalen des Anspruchs 1. Vorteilhafte Weiterbildungen der Erfindung sind den Unteransprüchen zu entnehmen.

Erfindungsgemäß bewirken die in Laufrichtung der Gleiskette sich erstrekkenden Rippen oder Rippenabschnitte in Kombination mit den quer zur Laufrichtung liegenden Rippen eine ausgezeichnete Spureigenschaft der Gleiskette im weichen oder schlammigen Boden oder im Schnee und Eis. Dabei ist gewährleistet, daß der erfindungsgemäß ausgebildete Verbinder die zum Festsitz des Verbinders auf den Bolzen erforderliche Elastizität oder Klemmeigenschaft besitzt.

Die Rippen auf dem Verbinder und auch auf der Bodenplatte sind so angeordnet, daß die Klemmeigenschaft des Verbinders nicht oder nahezu vernachlässigbar beeinträchtigt ist.

Weiter sind die fahrbahnseitig liegenden Schraubenköpfe der Verbinderschrauben gegen Beschädigung im Fahrbetrieb geschützt.

Ausführungsbeispiele der Erfindung sind in der Zeichnung dargestellt. Es zeigt
- Figur 1: einen Abschnitt eines Kettenkörpers mit Verbinder und Bolzen fahrbahnseitig,
- Figur 2: einen weiteren, Abschnitt 2 ist ein gezeichneter Kettenkörper, ebenfalls von der Fahrbahnseite her gesehen mit einem Verbinder und
- Figuren 3, 4: Verbinder.

Ein Kettenkörper 1 besteht aus Rohren 2, die durch Stege 3 fest miteinander verbunden sind. Ein Laufpolster 4 ist in Greiferleisten 5 gehalten.

Ein Zahneingriff 6 ist im Kettenkörper 1 durch die Stege 3 und durch die Rohre 2 gebildet. Ein nicht dargestelltes Triebzahnrad greift in den Zahneingriff 6 des Kettenkörpers 1 ein.

In den Rohren 2 sind gummigelagerte Bolzen 10 gelagert. Die Bolzen 10 benachbarter Kettenkörper 1 sind durch Verbinder 12 miteinander verbunden. Der Verbinder 12 ist im Prinzip als Rohrschelle mit zwei Rohrabschnitten 14, 15 und zwei Stegplatten 16, 17 und einer Schraubbefestigung 18 ausgebildet.

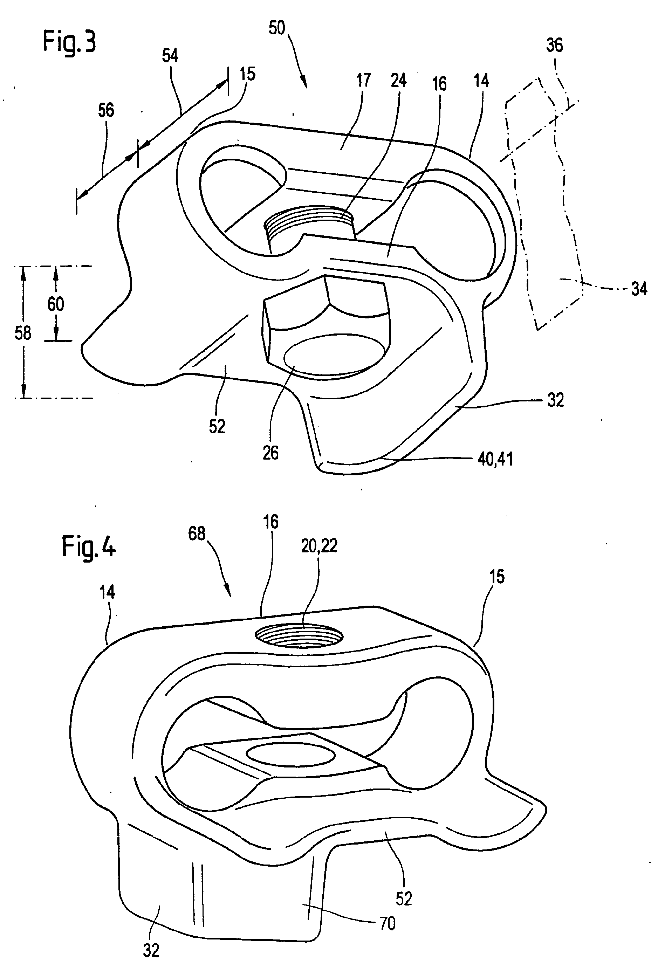

Entsprechend Figur 4 sind in den Stegplatten 16, 17 eine Durchgangsbohrung 20 und ein Gewinde 22 für eine Schraube 24 mit Kopf 26 vorgesehen.

Der Verbinder 12 weist zur Traktionserhöhung in den Fahrtrichtungen 30 und zwar quer zum Pfeil 30 eine Rippe 32 auf. Diese liegt in einer Längsebene 34, siehe Figur 3, wobei diese Längsebene 34 in der Längsachse 36 des Bolzens 10 bzw. des Rohrabschnitts 14 liegt, siehe Figur 3.

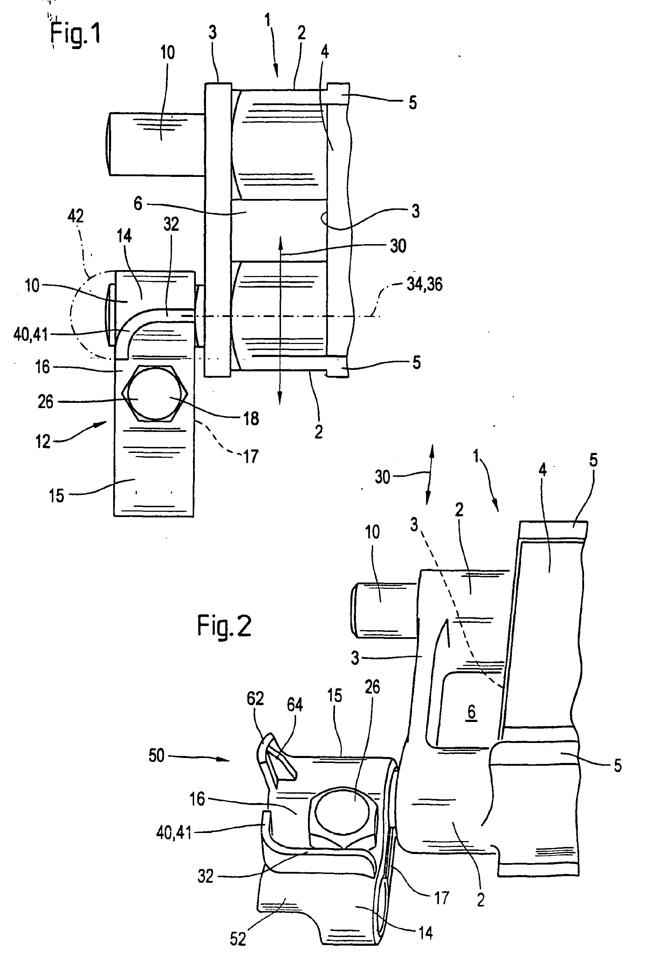

Die in Fahrtrichtung 30 liegende Rippe 40 ist nach den Figuren 1-3 als Bogen 41 ausgebildet und liegt innerhalb des Rohrabschnittes 14, siehe den strichpunktiert gezeichneten Kreisbogen 42. Der Bogen 41 erstreckt sich also nicht auf die Stegplatte 16, siehe Figur 1 oder auf die Bodenplatten 52, siehe Figur 4.

Bei einem Verbinder 50 ist die Stegplatte 16 durch eine Bodenplatte 52 seitlich verlängert, um die Aufstandsfläche der Gleiskette in weichem Untergrund zu vergrößern. Demzufolge erstreckt sich die Rippe 32 mit der anschließenden, gebogenen Rippe 40 über die Breite 54 des Verbinders 50 und die Breite 56 der Bodenplatte 52.

Der fahrbahnseitig liegende Kopf 26 der Schraube 24 liegt gegen äußere Einwirkungen geschützt innerhalb der Rippe 32 bzw. 40.
Die Höhe 58 der Rippe 32, 40 ist nahezu doppelt so groß als die Höhe 60 des Kopfes 26.

Nach Figur 2 weist der Verbinder 50 nach Figur 3 auf dem gegenüber liegenden Rohrabschnitt 15 eine weitere, in Fahrtrichtung 30 liegende Rippe 62 auf. Diese ist durch einen mittigen Steg 64 abgestützt.

Nach Figur 4 erstreckt sich die Rippe 32 über die Breite 54 des Verbinders 68. Sie ist einstückig verbunden mit einer diagonal zur Längsachse 36 des Bolzens 10 verlaufenden Rippe 70.

Die Rippen 32, 40 , 62, 70 sind nur auf einem der beiden Rohrabschnitte 14, 15 angeordnet. Damit wird eine Selbsthemmung der Kette beim Überfahren eines Hindernisses, wie Balken, verhindert.

Die gebogene Rippe 40, die Rippe 62 und die diagonale Rippe 70 bewirken die erforderliche Seitenführung der Gleiskette. Die genannten Rippen 40, 62, 70 können auch mehrfach, also hintereinander gestaffelt auf den Rohrabschnitten 14, 15 oder auch für sich allein auf der Bodenplatte 52 angeordnet sein.

## Patentansprüche

1. Gleiskette nach dem Verbinderprinzip, für schwimmfähige und geländegängige Kettenfahrzeuge
bei der die klemmbaren Verbinder (12) fahrbahnseitig eine Rippe (32) aufweisen,
wobei der Verbinder (12) aus zwei Rohrabschnitten (14, 15) zwei Stegplatten (16, 17) und aus einer Schraube (24) besteht
**dadurch gekennzeichnet,**
**daß** zur Erhöhung der Seitenführungskräfte der Gleiskette wenigstens eine in etwa der Fahrtrichtung (30) der Kette sich erstreckende Rippe (40) oder Rippenabschnitt vorgesehen ist.

2. Gleiskette nach Anspruch 1,
**dadurch gekennzeichnet,**
**daß** die Rippe (32, 40) höher ist als ein Kopf (26) der Schraube (24).

3. Gleiskette nach Anspruch 1,
**dadurch gekennzeichnet,**
**daß** eine parallel zur Längsachse (36) des Rohrabschnittes (14) angeordnete Rippe (32) wenigstens einen Rippenabschnitt (40, 62) aufweist, der sich etwa in Fahrtrichtung (30) der Gleiskette erstreckt.

4. Gleiskette nach einem der vorhergehenden Ansprüche,
**dadurch gekennzeichnet,**
**daß** die Rippe (32, 40) auf dem Rohrabschnitt (14, 15) angeordnet ist.

5. Gleiskette nach einem der vorhergehenden Ansprüche,
**dadurch gekennzeichnet,**
**daß** der Verbinder (50) bodenseitig durch eine Bodenplatte (52) seitlich verlängert ist,
und die Rippen oder Rippe (32, 40) auf dem Rohrabschnitt (14, 15) und dieser Bodenplatte (52) und zwar nur im Verlängerungsbereich des Rohrabschnittes (14, 15) vorgesehen ist.

6. Gleiskette nach Anspruch 1,
**dadurch gekennzeichnet,**
**daß** die quer zur Fahrtrichtung (30) liegende Rippe (32) in der Längsachse (36) des Bolzens (10) liegt.

7. Gleiskette nach Anspruch 1,
**dadurch gekennzeichnet,**
**daß** die in Fahrtrichtung (30) liegende Rippe (40) die Stegplatte (16, 17) nicht tangiert also nur mit den Rohrabschnitten (14, 15) oder deren Verlängerung einstückig verbunden ist.

8. Gleiskette nach einem der vorhergehenden Ansprüche,
**dadurch gekennzeichnet,**
**daß** die Rippen (32, 40) nur auf einem der beiden Rohrabschnitte (14, 15) angeordnet sind.

## Claims

1. Track chain based on the connector principle for amphibious and off-road tracked vehicles, in the case of which the clampable connectors (12) have a rib (32) on the carriageway side, the connector (12) comprising two tube sections (14, 15), two cross-plates (16, 17) and a screw (24),
**characterized in that** provided for the purpose of increasing the cornering forces of the track chain is at least one rib (40), or rib section, extending in approximately the direction of travel (30) of the chain.

2. Track chain according to Claim 1, **characterized in that** the rib (32, 40) is higher than a head (26) of the screw (24).

3. Track chain according to Claim 1, **characterized in that** a rib (32) arranged parallel to the longitudinal axis (36) of the tube section (14) has at least one rib section (40, 62) which extends approximately in the direction of travel (30) of the track chain.

4. Track chain according to one of the preceding claims, **characterized in that** the rib (32, 40) is arranged on the tube section (14, 15).

5. Track chain according to one of the preceding claims, **characterized in that** the connector (50) is extended laterally on the base side by a base plate (52), and the ribs or rib (32, 40) are/is provided on the tube section (14, 15) and this base plate (52), to be precise only in the extension region of the tube section (14, 15).

6. Track chain according to Claim 1, **characterized in that** the rib (32) located transversely to the direction of travel (30) is located along the longitudinal axis (36) of the bolt (10).

7. Track chain according to Claim 1, **characterized in that** the rib (40) located in the direction of travel (30) does not form a tangent to the cross-plate (16, 17), that is to say it is only connected integrally to the tube sections (14, 15) or the extension thereof.

8. Track chain according to one of the preceding claims, **characterized in that** the ribs (32, 40) are only arranged on one of the two tube sections (14, 15).

## Revendications

1. Chenille de type bi-tubulaire, destinée à des véhicules chenillés amphibies et terrestres, dans laquelle les coupleurs serrables (12) présentent du côté de la piste une nervure (32), le coupleur (12) étant constitué de deux segments tubulaires (14,15), de deux plaques formant âme (16,17) et d'un boulon (24), **caractérisée en ce qu'**au moins une nervure (40) ou un segment de nervure s'étendant environ dans la direction de la marche (30) de la chenille est prévu(e) afin d'augmenter les forces de guidage latéral de la chenille.

2. Chenille selon la revendication 1, **caractérisée en ce que** la nervure (32,40) est plus haute qu'une tête (26) du boulon (24).

3. Chenille selon la revendication 1, **caractérisée en ce qu'**une nervure (32) disposée parallèlement à l'axe longitudinal (36) du segment tubulaire (14) présente au moins un segment de nervure (40,62) qui s'étend environ dans la direction de la marche (30) de la chenille.

4. Chenille selon l'une quelconque des revendications précédentes, **caractérisée en ce que** la nervure (32,40) est disposée sur le segment tubulaire (14, 15).

5. Chenille selon l'une quelconque des revendications précédentes, **caractérisée en ce que** le coupleur (50) est prolongé latéralement du côté du fond par une plaque de fond (52), et les nervures ou la nervure (32,40) sont (est) prévue(s) sur le segment tubulaire (14,15) et sur ladite plaque de fond (52), et ce seulement dans la zone de prolongement du segment tubulaire (14,15).

6. Chenille selon la revendication 1, **caractérisée en ce que** la nervure (32) située transversalement par rapport à la direction de la marche (30) se trouve dans l'axe longitudinal (36) de la cheville (10).

7. Chenille selon la revendication 1, **caractérisée en ce que** la nervure (40) située dans la direction de la marche (30) n'est pas tangente à la plaque formant âme (16,17) et n'est donc raccordée d'une seule pièce qu'aux segments tubulaires (14,15) ou à leur prolongement.

8. Chenille selon l'une quelconque des revendications précédentes, **caractérisée en ce que** les nervures (32,40) sont seulement disposées sur l'un des deux segments tubulaires (14,15).
